Europäisches Patentamt

European Patent Office

Office européen des brevets

(11) Publication number: **0 186 843**
**B1**

(12) **EUROPEAN PATENT SPECIFICATION**

(45) Date of publication of patent specification: **11.07.90**

(51) Int. Cl.⁵: **F 25 J 3/04, B 01 D 53/22**

(21) Application number: **85116035.8**

(22) Date of filing: **16.12.85**

(54) Integrated gas separation process.

(30) Priority: **21.12.84 US 684655**
**25.07.85 US 759027**

(43) Date of publication of application:
**09.07.86 Bulletin 86/28**

(45) Publication of the grant of the patent:
**11.07.90 Bulletin 90/28**

(84) Designated Contracting States:
**BE DE FR GB IT NL SE**

(56) References cited:
**EP-A-0 044 679**
**EP-A-0 121 356**
**EP-A-0 142 005**
**EP-A-0 178 172**
**US-A-3 250 080**
**US-A-4 229 188**

**PATENT ABSTRACTS OF JAPAN, vol. 7, no. 268**
**(C-197)1413r, 30th November 1983; & JP-A-58**
**151 304 (NIHON SANSO K.K.) 08-09-1983**

(73) Proprietor: **AIR PRODUCTS AND CHEMICALS, INC.**
**P.O. Box 538**
**Allentown, Pennsylvania 18105 (US)**

(72) Inventor: **Agrawal, Rakesh**
**2636 S.Arch Street**
**S.W. Allentown PA 18103 (US)**
Inventor: **Auvil, Steven Ray**
**5633 Fresh Meadow Drive**
**Macungie, PA 18062 (US)**

(74) Representative: **Kador & Partner**
**Corneliusstrasse 15**
**D-8000 München 5 (DE)**

## Description

Technical Field of the Invention

The present invention relates to a process for separating nitrogen or hydrogen from a multicomponent gas stream.

Background of the Invention

The use of nitrogen has become increasingly important in various industrial and commercial operations. For example, liquid nitrogen is used to freeze food, in the cryogenic recycling of tires, as a source of gaseous nitrogen for inerting, etc. Gaseous nitrogen is used in applications such as secondary oil and gas recoveries and as a blanketing gas in metal refineries, metal working operations and chemical processes, etc. In light of the increasing importance of nitrogen in such operations, it is desirable to provide a process which is both economical and efficient for producing nitrogen in the liquid and/or gas phase.

High purity gaseous nitrogen is produced directly by well-known cryogenic separation methods. U.S. Patent 4,222,756 teaches a process and apparatus for producing gaseous nitrogen using multiple distillation columns and associated heat exchangers. Ruhemann and Limb, I. Chem. E. Symposium Series No. 79, pp 320 (1983) advocate a preference for the use of a single distillation column instead of the typical double column for the production of gaseous nitrogen.

Liquid nitrogen is typically produced by initially producing gaseous nitrogen in a cryogenic air separation unit and subsequently treating the gaseous nitrogen in a liquefier. Modified forms of cryogenic air separation units have been developed to directly produce liquid nitrogen. U.S. Patent 4,152,130 discloses a method of producing liquid oxygen and/or liquid nitrogen. This method comprises providing a substantially dry and substantially carbon dioxide free air stream, cryogenically treating the air stream to liquefy a portion of the air stream, and subsequently feeding the air stream into a fractionation column to separate the nitrogen and oxygen, and withdrawing liquid oxygen and/or nitrogen from said column.

The production of medium purity nitrogen or oxygen by noncryogenic air separation processes is achieved by using absorption, adsorption and membrane based processes. U.S. Patent 4,230,463 discloses multicomponent membranes which are effective for separating at least one gas from gaseous mixtures by permeation wherein the multicomponent membranes are comprised of a coating in occluding contact with a porous separation membrane. Selective separation provides preferential depletion or concentration of one or more desired gases in the mixture with respect to at least one other gas in the mixture, thereby producing a product gas mixture having a different proportion of gases than the original mixture. Membranes which provide an adequately selective separation of the one or more desired gases and also exhibit a sufficiently high flux rate are preferred.

A membrane separation technique is described in U.S. Patent 3,975,170. The method involves passing a fluid mixture whose hydrogen concentration is to be controlled through one chamber of a diffusion cell separated into two chambers by a hydrogen permeable membrane. A gradient of hydrogen partial pressure is then maintained across the membrane at a level sufficient to cause diffusion of hydrogen through the membrane to maintain the concentration of hydrogen in the fluid mixture at a predetermined level. The hydrogen concentration of the fluid may be controlled to some positive value by maintaining a second fluid-containing hydrogen gas in the other chamber of the diffusion cell, or the hydrogen concentration in the fluid may be controlled to a value approximating zero hydrogen concentration by maintaining a near vacuum in the other chamber of the diffusion cell.

Membrane units have been used in conjunction with cryogenic separation units for the production of gaseous oxygen. In these systems, air is initially fed to a membrane where a nitrogen-rich stream is produced and subsequently vented to the atmosphere. The oxygen-rich permeate stream is fed to the cryogenic system to produce a purified gaseous oxygen stream. Examples of this type of process are described in Japanese patents 58—156173 and 58—151305.

U.S. patent 4 229 188 provides an improved adsorption process for the recovery of hydrogen and normally liquid hydrocarbon from a feed gas mixture by utilizing a membrane permeator unit selectively permeable to hydrogen to recover a permeated hydrogen gas from the purge gas obtained from the regeneration of a selective adsorption unit, recycling the permeated hydrogen gas to a guard adsorber of the selective adsorption unit as purge gas and blending said gas with the feed gas mixture for recovery of normally liquid hydrocarbon and of the added proportion of hydrogen as purified hydrogen product.

Brief Summary of the Invention

The present invention provides for an efficient process for the production of liquid and/or gaseous nitrogen from a feed gas stream comprising oxygen and nitrogen, such as air. This process comprises treating the feed gas stream in a cryogenic processing unit which involves cooling and at least partial removal of one component of the gas stream and subsequently withdrawing at least a portion of the treated gas stream having the lower nitrogen concentration from said processing unit and introducing said stream into a membrane separation unit. In the membrane separation unit, the gas stream is separated to form a nitrogen-rich stream and an oxygen-rich stream. The nitrogen-rich stream is returned to the cryogenic separation unit for further treatment and separation to produce a purified liquid and/or gaseous nitrogen-rich product stream. Optionally, the oxygen-rich stream generated by the membrane separation unit can be returned to the cryogenic separation unit for further processing. Preferably, the feed gas stream is passed through a clean-up unit, such as a molecular sieve bed, to remove impurities prior to entering the cryogenic processing unit.

The present invention also provides an efficient process for the recovery of hydrogen from a feed gas mixture comprising hydrogen and at least one other component. This process comprises treating the feed gas mixture in a non-membrane separation unit, such as a cryogenic processing unit, and subsequently withdrawing at least a portion of the treated gas stream from said processing unit and introducing said portion into a membrane separation unit. In the membrane separtion unit, the gas stream is separated to form a hydrogen-rich stream and a hydrogen-lean stream. The hydrogen-rich stream is collected as usable product. The hydrogen-lean stream is returned to the non-membrane separation unit for further treatment and separation. The non-membrane unit can optionally produce a hydrogen-rich stream which can be combined with the hydrogen-rich stream from the membrane unit to form a combined hydrogen-rich product stream.

If the initial feed gas mixture is sufficiently rich in hydrogen, said feed mixture may initially be passed through a membrane unit to separate out a portion of the hydrogen prior to introducing the feed gas mixture into the non-membrane separation unit.

Incorporating one or more membrane units into a non-membrane processing unit at some point, or points, can improve the efficiency and economics of the system. Specifically, incorporating a membrane separation unit allows a given non-membrane separation unit to be operated efficiently at conditions that might be inefficient when operated on a stand-alone basis. Consequently, separation techniques that were considered inefficient in the past may, when properly coupled with a membrane system, yield superior and feasible processes. This is due in part to the fact that, in the integrated system, use of the membrane provides an additional degree of freedom to adjust the process parameters for further optimization. By proper integration of the membrane and the non-membrane separation units, each of the units operate in their favorable range of operation. In the present process arrangement, both the membrane and the non-membrane separation units complement each others operation to yield a highly efficient process which could not be achieved with separate stand-alone processes. For example, the advantages of the integrated process over typical stand-alone processes may include: significantly higher hydrogen recovery at a given hydrogen purity, a reduction in the size of the equipment needed for the non-membrane separation unit, and a significant power savings in the overall operation of the system.

Brief Description of the Drawings

Figure 1 is a general schematic flow diagram of the process of the present invention.

Figure 2 is a specific flow diagram of one particular embodiment of the present invention.

Figure 3 is a graphical representation of the power requirements of the system shown in Figure 2 as a function of the pressure of the partially treated gas stream leaving the cryogenic unit.

Figure 4 is a specific flow diagram of another embodiment of the present invention.

Figure 5 is a flow diagram of one embodiment of the present invention having one membrane separation unit.

Figure 6 is a flow diagram of one embodiment of the present invention having two membrane separation units.

Detailed Description of the Invention

The present invention provides for an efficient process for separating components of a gas stream containing two or more components by the integration of one or more membrane units with a suitable non-membrane separation unit, such as a cryogenic separation unit.

The gas stream is initially fed to a cryogenic processing unit where it undergoes cryogenic treatment. The specific cryogenic treatment will depend upon the composition of the gas stream being treated and the end product desired, but in any case will involve cooling and at least partial removal of one component of the gas stream. At least a portion; i.e., at least about 5% based on initial feed, of the treated gas stream is removed from the cryogenic separation unit and fed to a membrane separation unit. The amount withdrawn at this point is dependent upon equipment size and capacity, flow rates, desired end product purity, and optimization conditions. The withdrawn portion of the gas stream is partially separated in the membrane unit thereby forming a permeate stream and a reject stream. The type of membrane used is dependent upon its selectivity for the components which are to be separated and, hence, will vary with the make-up of the feed.

The feed to the membrane is partially separated to form a permeate stream and a reject stream. Depending upon the product desired, at least one of the streams from the membrane unit is returned to the cryogenic separation unit for further treatment; i.e. cooling and separation, to form a purified gaseous and/ or liquid product.

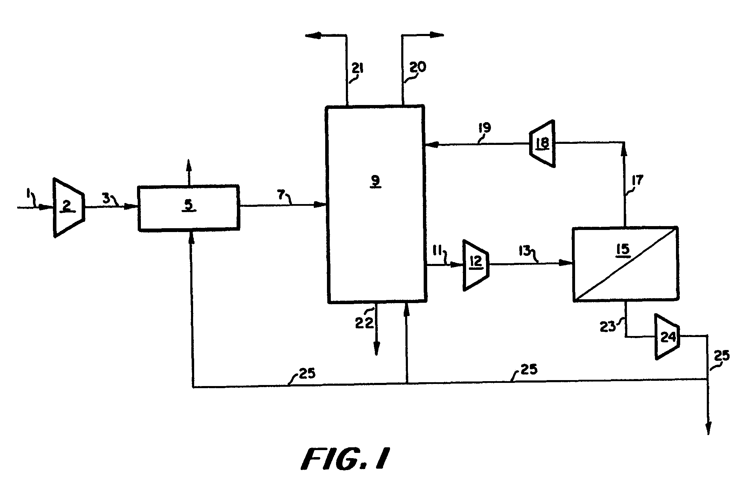

A general description of the process can be had by reference to Figure 1. A gas stream 1 comprising nitrogen and oxygen is passed through a clean-up unit 5 to remove $CO_2$, $H_2O$ and any other impurities. While gas stream 1 can be any gas containing nitrogen and oxygen, air is most commonly used. Gas stream 1 is optionally passed through a compressor 2 to form a compressed feed stream 3 before being passed through the clean-up unit 5. Compression is optional and will depend upon the source of the gas stream 1 and the type of clean-up unit 5 employed. Any suitable clean-up system which is commonly known in the art can be used to remove impurities from the gas stream. One example of such a clean-up unit is a unit comprising molecular sieve beds wherein one train is on line while an adjacent train is being regenerated. A clean gas stream 7 leaves the clean-up unit and is subsequently fed to the cryogenic process unit 9 where it undergoes cryogenic treatment in accordance with the type of product desired.

If liquid nitrogen is the predominant product of choice, the cryogenic process unit may consist of any suitable cryogenic cycle to separate nitrogen from air, combined with a liquefier to produce liquid nitrogen, stream 20. Alternatively, both the separation and the liquefaction functions can be performed by the same cryogenic cycle. In this mode, gaseous nitrogen, stream 21, can still be one of the products as well as liquid nitrogen, stream 20.

If gaseous nitrogen is the predominant desired product, the cryogenic process can consist of any suitable cryogenic cycle to separate air and produce gaseous nitrogen, stream 21. A liquefier will not be needed in this case, however a small quantity of liquid nitrogen, stream 20, can still be produced. The cryogenic system itself can be adjusted and altered to produce any desired mix of gaseous and liquid nitrogen.

Subsequently, at least a portion of the treated gas stream is withdrawn, as stream 11, from the cryogenic process unit 9 at an appropriate point in the cryogenic cycle. This treated gas stream 11 is optionally passed through a compressor 12 to produce a compressed stream 13 which is passed to a membrane separation unit 15. The membrane separation unit or units may be a single stage membrane device or, alternatively, a cascade of membranes to achieve even better separation of stream 13. Although Figure 1 shows only one stream 11 leaving the cryogenic process unit 9 and serving as a feed to a single membrane separation unit 15, in practice one or more streams can be taken from the cryogenic process unit and fed to one or more membrane units. The number of streams taken from the cryogenic unit 9 as well as the composition, pressure, and temperature of the streams is dependent upon the cryogenic cycle used, and is adjusted so that the performance of the total plant is at its most optimal point.

The membrane separation unit 15 has some selectivity for separating nitrogen and oxygen when a pressure differential is maintained across the membrane. Typically, the oxygen permeability through the membrane is greater than that of nitrogen. The concentration of nitrogen in the reject stream 17 from the membrane separation unit is higher than its concentration in the compressed stream 13 entering the membrane. Typically, the pressure of this nitrogen-rich reject stream 17 is within a few psi of the compressed stream 13. The nitrogen-rich reject stream 17 is subsequently introduced at an appropriate point in the cryogenic process unit 9. If required by the cryogenic process, the pressure of the nitrogen-rich reject stream 17 may be increased to a desired level by passing it through a compressor 18 to provide a compressed nitrogen-rich stream 19. The compressed nitrogen-rich stream 19 undergoes further treatment and separation in the cryogenic separation unit 9 to produce one or more nitrogen-rich product streams. In the drawing, two product streams, 20 and 21, represent a liquid nitrogen-rich product stream and a gaseous nitrogen-rich product stream respectively, although it is understood that the nitrogen-rich product stream could be single phase. The nitrogen-rich product streams generally have a purity of greater than 99.7% and the system typically exhibits a total nitrogen recovery of greater than 75%. The gases separated from the nitrogen-rich stream in the cryogenic process unit 9 may exit the unit as stream 22 and can be recycled, discarded, or employed in any other applicable process.

An oxygen-rich permeate stream 23 leaves the membrane system and is optionally passed through a compressor 24 to produce an oxygen-rich compressed stream 25. In certain embodiments of the present invention the permeate side of the membrane unit may be at a pressure lower than ambient, and consequently compressor 24 may be replaced by a vacuum pump (not shown). The oxygen-rich compressed stream 25 may be a useful product, or it can be vented off as a waste from the plant. Additionally, at least a portion of the stream may be returned to the cryogenic process unit for further treatment and recovery of any nitrogen present in the stream. Also, at least a portion of stream 25 may be passed through the water-carbon dioxide removal unit 5 as a regeneration gas.

A wide rang of process conditions, including temperatures, pressures, flow rates, etc. can be employed in the present integrated cryogenic-membrane process to achieve optimum results depending upon the equipment used and the desired type and concentration of product. The examples below illustrate several of these various process schemes. These examples are meant only to be illustrative and are not meant to limit the scope of the invention.

## Example 1

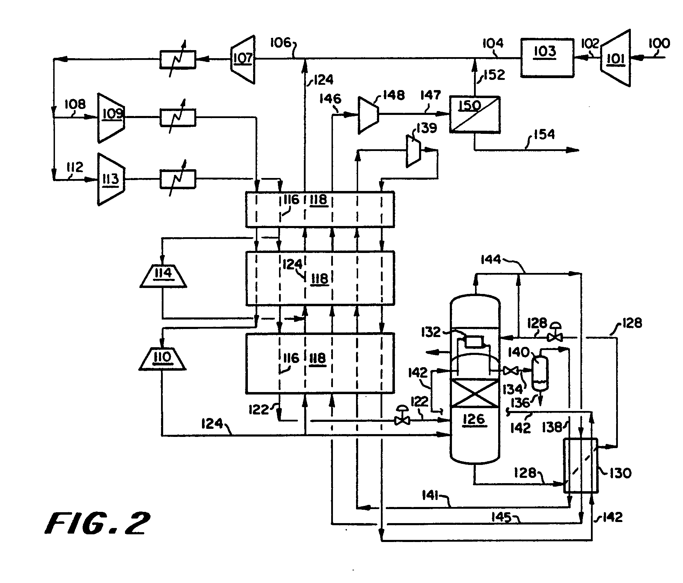

An integrated cryogenic-membrane process was designed to produce liquid nitrogen as the main product. This process design is illustrated in Figure 2, and represents a plant producing liquid nitrogen at a rate of about 74 tons/day.

An ambient air stream 100 is compressed by compressor 101 to provide stream 102 which is subsequently passed through a molecular sieve clean-up unit 103 to remove carbon dioxide and water. The purified stream 104 is mixed with the reject stream 152 from the membrane separation unit 150 and also with air-recycle stream 124 to form mixed stream 106. The mixed stream 106 is further compressed by compressor 107 and divided into two streams, 108 and 112. Stream 108 is compressed by compressor 109 which is driven by expander 110. Similarly, stream 112 is compressed by compressor 113 which is driven by expander 114. This arrangement provides refrigeration to the cryogenic plant.

EP 0 186 843 B1

A part of the compressed air stream 116 is condensed in the main heat exchanger 118 against the returning cold streams 124 and 146 to produce liquid air stream 122. This liquid stream 122, along with a portion of exhaust air stream 124 from expander 110 is fed to the bottom of a distillation column 126. Oxygen-rich liquid product 128 from the bottom of the distillation column 126 is cooled in a heat exchanger 130 and flashed in a boiler/condenser 132 located at the top of the distillation column. The gaseous nitrogen stream at the top of the distillation column is condensed in the boiler/condenser to provide the liquid reflux at the top of the distillation column and a liquid nitrogen stream 134. Stream 134 is flashed to a lower pressure to give a liquid nitrogen product stream 136, at the desired pressure. The low pressure gaseous nitrogen stream 138 from the flash unit 140 is warmed in the heat exchanger 130 to form warm nitrogen stream 141 which is further warmed in main heat exchangers 118, compressed in compressor 139 to the required pressure, and cooled in the main heat exchangers 118 to form stream 142, which is further cooled in heat exchanger 130 and recycled to the distillation column 126.

Condensation of the gaseous nitrogen at the top of the boiler/condenser vaporizes the oxygen-rich stream 128 from the bottom of the distillation column 126 to provide a gaseous oxygen-rich stream 144, which is warmed in heat exchanger 130 to give oxygen-rich stream 145.

The oxygen-rich stream 145 is further warmed in the main heat exchangers 118 to form oxygen-rich stream 146 which is compressed by compressor 148 to form the feed 147 to the membrane unit 150. The membrane unit separates the feed into a reject stream 152 and a permeate stream 154.

Several variations of this process scheme were run altering the pressure of the feed stream 147 entering the membrane unit 150.

In Case I, the pressure of the feed stream 147 to the membrane unit 150 was chosen such that the pressure of the reject stream 152 is about the same as that of the air stream from the molecular sieve unit. In this case, the reject stream 152 could be directly mixed with the air stream 104 from the molesieve unit 103.

In Case II, the feed 147 to the membrane unit 150 was at a much higher pressure than the air stream 104 leaving the molesieve unit 103. Providing a higher pressure feed to the membrane unit as well as a larger pressure differential across the membrane itself, allows for a smaller membrane to be used. The decrease in cost associated with using a smaller membrane, however, comes at the expense of an increase in power consumption to pressurize the feed.

Case III was run under the same process conditions as Case II, except that a membrane having greater oxygen selectivity was exployed.

The process conditions for Cases I—III are reported in Table 1 below.

5

TABLE 1

Stream

| | 100* | | | 122 | 136 | 144 | 146 | 147* | | | 152* | | |
|---|---|---|---|---|---|---|---|---|---|---|---|---|---|
| | I | II | III | | | | | I | II | III | I | II | III |
| Temp (°C) | 29 | 29 | 29 | −165 | −193 | −177 | 32 | 32 | 32 | 32 | 32 | 32 | 32 |
| Pressure (psia) | 14.7 | 14.7 | 14.7 | 625 | 20 | 52 | 50 | 100 | 270 | 270 | 96 | 265 | 265 |
| Flow Rate (lbmoles/hr) | 332 | 319 | 310 | 300 | 220 | 492 | 492 | 492 | 492 | 492 | 381 | 393 | 403 |

*Represent variations for Cases I-III, as described above.

The results of running the process according to Cases I—III were compared to operating the base cryogenic process without a membrane system. The process conditions reported in Table 1 were used for this comparison. The examples were carried out using air at 14.7 psia. 29°C, 50% relative humidity, and a liquid nitrogen production rate of about 74 tons/day. The results are reported in Table 2 below.

## TABLE 2

|  | Base | I | II | III |
|---|---|---|---|---|
| Pressure of stream 146 from the cryogenic process (psia) | 17.7 | 50.0 | 50.0 | 50.0 |
| Pressure of the feed to the membrane (psia) | -- | 100 | 270 | 270 |
| $O_2/N_2$ permeability ratio | -- | 7.5 | 7.5 | 10.0 |
| Overall nitrogen recovery (%) | 45 | 85 | 88 | 91 |
| Relative membrane area | -- | 1.0 | 0.26 | 0.26 |
| Total power (kw) | 2082 | 1943 | 1970 | 1955 |

From the results reported in Table 2, it can be seen that the base cryogenic process with a membrane system recovers only about 45% of the nitrogen at a power requirement of about 2082 kw for a 74 ton/day operation. The nitrogen recovery for all the cryogenic-membrane systems is significantly higher, while operating at a lower power requirement. It is this higher nitrogen recovery at a lower power requirement which makes the integrated process a more efficient and economical system than using the cryogenic process alone.

Since the air flow rate to the molecular sieve unit for the integrated cryogenic-membrane system is about half, and the pressure is about twice that of the base cryogenic unit, the size of the molecular sieve unit for the integrated system is significantly reduced.

As compared to the base cryogenic system, the pressures of all the streams in the heat exchanger for the integrated cryogenic-membrane unit are higher; and therefore in the later case, all the cryogenic equipment can be made smaller in size leading to a smaller heat exchanger. The reduction in size results in additional capital savings for the integrated system.

Additionally, the integrated system produces an oxygen-rich stream that is much richer in oxygen than that produced by the base cryogenic system and hence is a more useful product.

Example 2

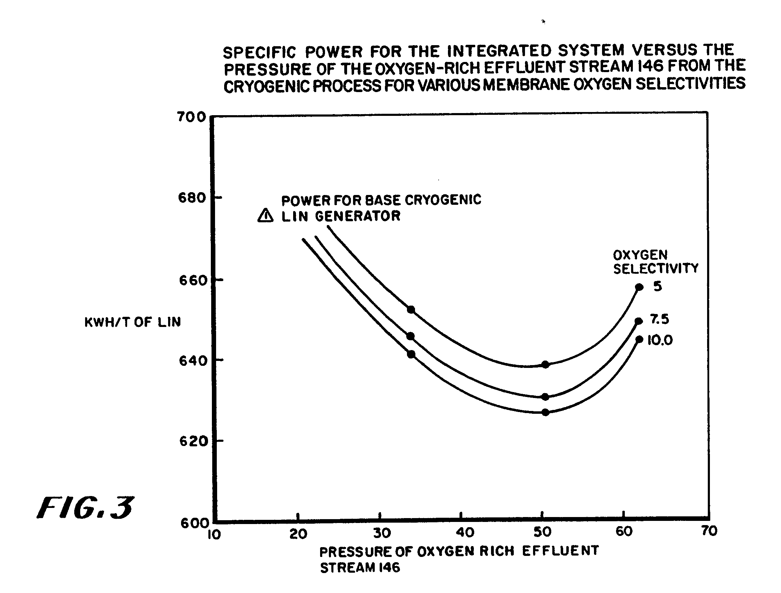

A number of runs were performed for the process in Figure 2 to determine the effect of the pressure of the oxygen-rich effluent stream 146 leaving the cryogenic process unit. The results are summarized graphically in Figure 3. The results of these runs show that the overall power consumption of the integrated system was significantly lower than that of the base case over a wide range of pressures. The pressure at which the base cryogenic process can be operated is strictly limited by the constraints of the process. Additionally, it was seen that there is a tradeoff of opposing effects between the cryogenic process and the membrane unit. The net result of these opposing effects is that each process may operate at a point that is somewhat inefficient for that process, but when the processes are combined, a minimum in the power requirements occur.

As seen in Figure 3, the optimum pressure for the oxygen-rich stream, (Stream 146 in Figure 2), is between 45—55 psia. The optimum pressure for this stream however, will vary depending on the particulars of the integrated process which is used.

Example 3

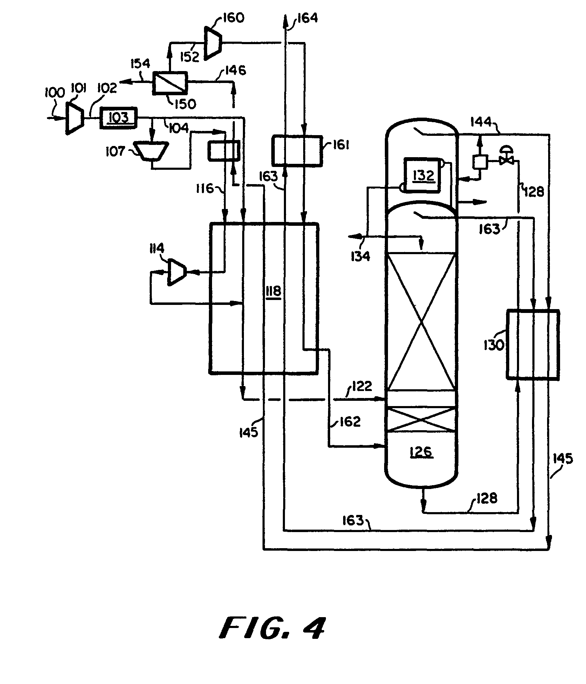

A system was designed in accordance with the present invention wherein gaseous nitrogen is the primary product. This system is depicted in Figure 4. Steams and equipment which are similar to and correspond to those in Figure 2 are numbered the same and, except where necessary for clarity, are not discussed further.

A cooled air stream 122 is fed to distillation column 126, where it is treated to remove nitrogen and form an oxygen-rich stream 128 from the bottom of the distillation column. This oxygen-rich stream 128 is passed through heat exchanger 130 and into a boiler/condenser 132 at the top of the distillation column

7

126. An oxygen-rich stream 144 exits the boiler/condenser 132 at the top of the distillation column 126 and is warmed in heat exchanger 130 to provide a warmed oxygen-rich stream 145. This stream 145 is further warmed in heat exchanger 118 to provide stream 146 which is subsequently fed to the membrane unit 150 to produce reject stream 152 and permeate stream 154. The reject stream 152 from the membrane unit is compressed by compressor 160 and cooled in heat exchangers 161 and 118 to form a cooled feed 162 which is then fed to the distillation column 126 on an appropriate tray below the air feed. The cooled feed 162, along with the air feed 122 and previously removed nitrogen, is treated in the distillation column to form a nitrogen-rich stream 163 which is withdrawn from the top of the distillation column. Nitrogen-rich stream 163 is passed through heat exchangers 130, 118 and 161 to form gaseous nitrogen product stream 164. While the main product is collected as gaseous nitrogen, stream 164, some liquid nitrogen product may also be produced, stream 134. The concentration of oxygen in the gaseous nitrogen product stream is less than 5 ppm.

Results for operating this system using air at 14.7 psia, 29°C, 50% relative humidity and a gaseous nitrogen production rate of 87 tons/day at 115 psia are reported in Table 3 below. A small quantity of liquid nitrogen was also produced at a rate of 1.3 tons/day. Table 3 compares the results of this process with a base cryogenic process for producing gaseous nitrogen without a membrane system.

## TABLE 3

| | Base | Integrated Cryogenic-Membrane |
|---|---|---|
| Pressure of the oxygen-rich stream 146, from the cryogenic process (psia) | 17.1 | 55.0 |
| $O_2/N_2$ permeability ratio | -- | 7.5 |
| Overall $N_2$ recovery (%) | 64 | 87 |
| Oxygen concentration in the feed to the membrane (%) | -- | 42 |
| Oxygen concentration in the reject from the membrane (%) | -- | 29 |
| Total Power Consumption (kw) | 671 | 645 |

The results reported in Table 3 show that the overall recovery of nitrogen, based on the air feed, is 87% for the integrated cryogenic-membrane process as compared to only 64% for the base cryogenic process. The integrated system achieves this greater recovery while operating at a lower total power consumption than the base process.

Example 4

Several runs were made to produce a 96.5% pure hydrogen stream at about 500 psia from a gaseous feed mixture containing 25% hydrogen at about 280 psia. The concentration of hydrogen is typical of those found in fluid catalytic cracking off-gas streams, for which the present process is particularly adaptable. In this example, the non-membrane separation unit was a suitable cryogenic separation unit. The feed gas properties for all of the runs in this example are set out in Table 4 below.

# EP 0 186 843 B1

## Table 4

### Feed Gas Properties for Example 4

Feed Rate    = 4250 lb moles/hr

Pressure     = 280.0 psia

Temperature = 38°C

Composition:

| Component | Mole % |
|---|---|
| Hydrogen | 25.0 |
| Nitrogen | 5.0 |
| Methane | 33.0 |
| Ethane | 27.0 |
| Propane | 6.5 |
| Butane | 2.0 |
| Pentane | 1.0 |
| Hydrogen Sulfide | 0.5 |

Run 1

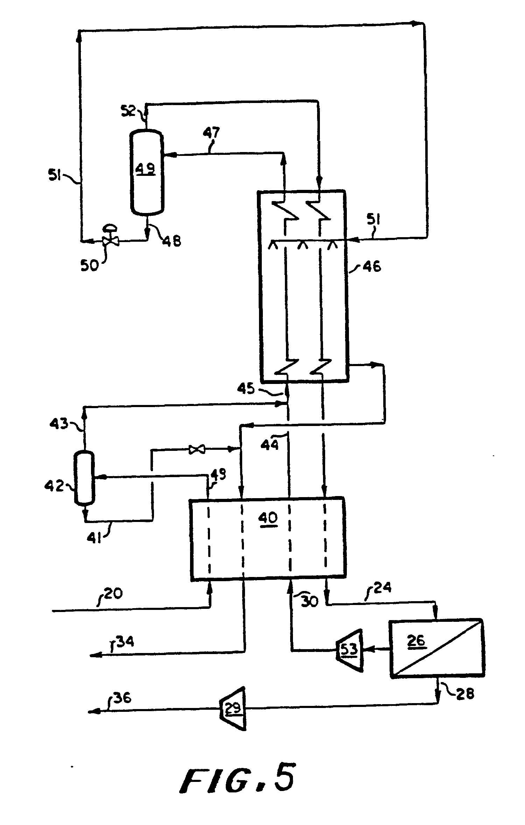

A hybrid cryogenic/membrane process based on the concept of Figure 1 was carried out and is shown in detail in Figure 5. The feed stream 20 is cooled to a temperature of about −45°C in heat exchanger 40 to form stream 49 containing gaseous components and condensed propane and heavier hydrocarbons. The condensed portion of stream 49 is separated as stream 41 in separator 42. The non-condensed portion, stream 43, is mixed with the cooled reject stream 44 from the membrane unit 26, to form combined stream 45. The combined stream 45 is further cooled to a temperature of about −170°C in heat exchanger 46, to yield a partially condensed stream 47. The condensed portion of this stream is separated as stream 48 in separator 49 and expanded across a valve 50, to a low pressure of about 21 psia, to provide cooling for heat exchanger 46. The non-condensed portion, stream 52, has 83% hydrogen, 14.5% nitrogen, 2.5% methane, and the other components are present only in trace quantities. The non-condensed stream 52 is passed through exchangers 46 and 40, to yield stream 24, which is fed to a semi-permeable membrane unit 26. Hydrogen has a much higher permeability through the membrane, relative to the other components contained in stream 40. By maintaining a pressure difference across the membrane, permeate stream 28, with the hydrogen concentration of about 96.5% at 100 psi pressure, is collected from the membrane unit 26. The non-permeate or reject stream, from the membrane unit 26, which is close in pressure to that of feed stream 24, is boosted in pressure by compressor 53, to provide compressed stream 30 at about 272 psia. Stream 30 is rich in nitrogen and is recycled back to heat exchanger 40. Alternately, stream 24 could be boosted in pressure, and stream 30 could be recycled without any compression. The permeate stream 28, from the membrane unit 26, is further compressed by compressor 29 to give a final hydrogen product stream 36, at about 500 psia. The separated propane and heavier hydrocarbons are combined and collected as a product or waste stream 34. The details of the key process streams for this integrated cryogenic/membrane process are given in Table 5 below.

9

## Table 5

### Key Process Streams for Hybrid Cryogenic/Membrane Process of Figure 5 for Example 4

| Stream Number | 20 | 43 | 48 | 52 | 24 | 30 | 28 | 34 |
|---|---|---|---|---|---|---|---|---|
| Pressure (psia) | 280 | 270 | 260 | 260 | 255 | 272 | 100 | 16 |
| Temperature (°C) | 38 | -45 | -170 | -170 | 30 | 38 | 30 | 30 |
| Total Flow (lb mole/hr) | 4250 | 3399 | 2315 | 1395 | 1395 | 311 | 1084 | 3166 |
| Composition (mole %) | | | | | | | | |
| Hydrogen | 25.0 | 31.1 | 0.6 | 83.0 | 83.0 | 36.3 | 96.5 | 0.5 |
| Nitrogen | 5.0 | 6.2 | 7.8 | 14.5 | 14.5 | 55.2 | 2.8 | 5.8 |
| Methane | 33.0 | 39.2 | 57.2 | 2.5 | 2.5 | 8.5 | 0.7 | 44.1 |
| Ethane | 27.0 | 21.0 | 30.8 | -- | -- | -- | -- | 36.2 |
| Propane | 6.5 | 1.9 | 2.8 | -- | -- | -- | -- | 8.7 |
| Butane | 2.0 | 0.2 | 0.2 | -- | -- | -- | -- | 2.7 |
| Pentane | 1.0 | 0.0 | 0.0 | -- | -- | -- | -- | 1.3 |
| Hydrogen Sulfide | 0.5 | 0.4 | 0.6 | -- | -- | -- | -- | 0.7 |

**Run 2**

The same type of stream as treated in Run 1 was treated in a stand-alone cryogenic unit, to provide the desired 96.5% pure hydrogen stream at 500 psia from the same type of feed as treated above. As can be seen in Table 6 below, in order to achieve the hydrogen product purity desired, this stand-alone unit recovers only about 30.7% of the hydrogen in the feed as compared to about 98.4% for Run 1.

**Run 3**

A second stand-alone cryogenic process was carried out with conditions altered so that hydrogen recovery was similar to that in Run 1 at the same hydrogen purity. A comparison of the power required to achieve these results for the stand-alone cryogenic process as compared to Run 1, as can be seen in Table 6 below, is substantially greater than the power required for the integrated cryogenic/membrane hybrid system.

**Run 4**

A stand-alone membrane system was used to produce the desired purity hydrogen product as set out above. Since the maximum concentration of hydrogen in the permeate stream from a single stage membrane unit is about 89%, it was decided to use a two stage hydrogen cascade system with internal recycle. As can be seen in Table 6 below, the results achieved from this system is only 61.6% hydrogen recovery at a power requirement of about 2.4 times that of Run 1, which recover a significantly higher percentage of hydrogen.

## Table 6

### Hydrogen Recovery and Power Consumption for All the Runs of Example 4

#### Final Product Pressure = 500 psia

| Run | 1 | 2 | 3 | 4 |
|---|---|---|---|---|
| $H_2$ Recovery (%) | 98.4 | 30.7 | 98.9 | 61.6 |
| Power (KW): | | | | |
| Membrane Reject Booster | 15 | -- | -- | 1161 |
| Low Pressure Product Compressor | -- | -- | 1276 | 847 |
| Medium Pressure Product Compressor | 840 | 110 | 110 | -- |
| Total (KW) | 855 | 110 | 1386 | 2008 |

## Example 5

Runs were made to produce a 97.3 mole% hydrogen stream at about 2,000 psia from a feed stream containing 86.9 mole% hydrogen at 2,000 psia. The hydrogen concentration of the feed is typical of a hydrocracker off-gas. As in Example 4, the non-membrane unit was a suitable cryogenic separation unit. The hydrogen partial pressure of the feed stream was sufficiently high to allow the feed to be passed directly to an initial membrane unit for partial hydrogen separation. The feed gas properties for all the runs in this example are set out in Table 7 below.

## Table 7

### Feed Stock Properties for Example 5

Feed Rate        =  2183 lb moles/hr

Pressure         =  2000 psia

Temperature      =  65.5°C

Composition:

| Component | Mole % |
|---|---|
| Hydrogen | 86.9 |
| Methane | 10.0 |
| Ethane | 0.4 |
| Propane | 0.9 |
| n-Butane | 1.4 |
| n-Pentane | 0.3 |
| Hydrogen Sulfide | 0.1 |

Run 1

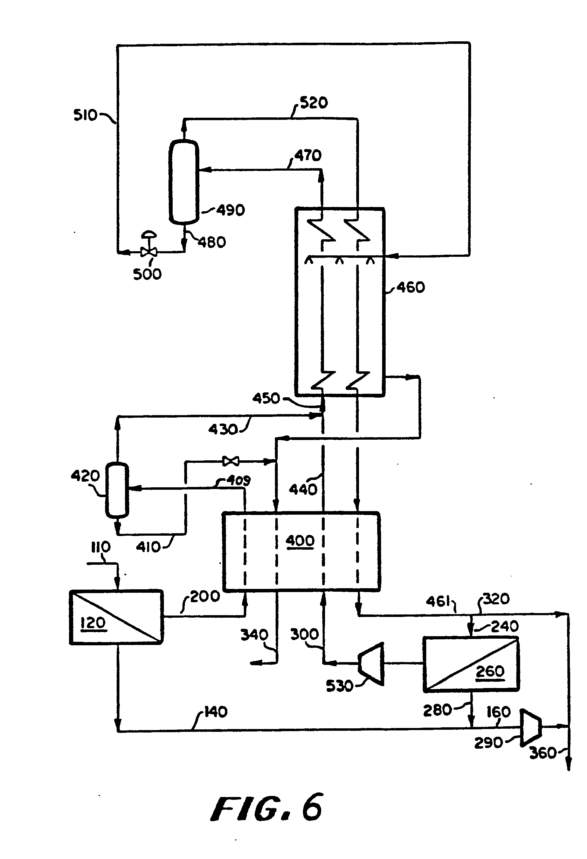

A hybrid cryogenic/membrane process for separating a stream having a high hydrogen concentration was carried out and is shown in detail in Figure 6. The feed stream 110 is fed to an initial membrane separation unit 120 to form a permeate stream 140 and a reject stream 200. The permeate stream comprises about 98 mole % hydrogen and is collected as product. The reject stream 200 from the membrane unit 120 is cooled to a temperature of about 10°C in heat exchanger 400 to form stream 409 containing gaseous components and condensed propane and heavier hydrocarbons. The condensed portion of stream 409 is separated as stream 410 in separator 420. The non-condensed portion, stream 430, is mixed with the cooled reject stream 440 from membrane unit 260 to form combined stream 450. Combined stream 450 is cooled in heat exchanger 460 to form a partially condensed stream 470 at a temperature of about −148°C. The condensed portion, comprising mostly propane and heavier hydrocarbons, of stream 470 is separated in separator 490 as stream 480 and expanded across a valve 500 to yield stream 510 at a pressure of about 21 psia which provides cooling for heat exchanger 460. The non-condensed portion of stream 470, separated as stream 520, contains about 93.0 mole % hydrogen and about 7.0 mole % methane, with other components present only in trace quantities. Stream 520 is then passed through heat exchangers 460 and 400, to yield stream 461. A portion of stream 461 is collected as hydrogen-rich product stream 320 while the remainder of stream 461 is fed to a semi-permeable membrane unit 260 as stream 240. Hydrogen has a much higher permeability through the membrane relative to the other components contained in stream 240. By maintaining a pressure difference across the membrane 260, permeate stream 280 with a hydrogen concentration of about 98.2% at 1,300 psia is collected from the membrane unit 260. Permeate stream 280 is combined with permeate stream 140 to form combined stream 160 which is compressed to about 1,925 psia in compressor 290, after which it is combined with stream 320 to form a hydrogen product stream 360. The non-permeate or reject stream is pressurized to about 1,945 psia in compressor 530 to form stream 300 and recycled back to heat exchangers 400 and 460. The separated propane and heavier hydrocarbons are recovered as a waste or product stream 340. The details of the key process streams for this integrated cryogenic/membrane process are given in Table 8 below.

<div align="center">Table 8</div>

<div align="center">Key Process Steams for Hybrid Cryogenic-Membrane Process of Figure 6 for Example 5, Run 1</div>

| Steam Number | 110 | 140 | 200 | 430 | 480 | 520 | 320 | 240 | 300 | 280 |
|---|---|---|---|---|---|---|---|---|---|---|
| Pressure (psia) | 2000 | 1300 | 1950 | 1940 | 1930 | 1930 | 1925 | 1925 | 1945 | 1300 |
| Temperature (°C) | 65.5 | 65.5 | 65.5 | 10.0 | −148.3 | −148.3 | 56.1 | 62.8 | 62.8 | 62.8 |
| Total Flow (lb mole/hr) | 2183 | 1241 | 942 | 913 | 227 | 765 | 285 | 480 | 79 | 401 |
| Composition (mole %) | | | | | | | | | | |
| Hydrogen | 86.9 | 98.0 | 72.3 | 74.3 | 8.7 | 93.0 | 93.0 | 93.0 | 66.4 | 98.2 |
| Methane | 10.0 | 1.6 | 21.0 | 21.3 | 73.6 | 7.0 | 7.0 | 7.0 | 33.6 | 1.8 |
| Ethane | 0.4 | 0.1 | 0.9 | 0.8 | 3.3 | 0.0 | 0.0 | 0.0 | 0.0 | 0.0 |
| Propane | 0.9 | 0.1 | 2.0 | 1.6 | 6.3 | 0.0 | 0.0 | 0.0 | 0.0 | 0.0 |
| n-Butane | 1.4 | 0.1 | 3.0 | 1.7 | 6.8 | 0.0 | 0.0 | 0.0 | 0.0 | 0.0 |
| n-Pentane | 0.3 | 0.0 | 0.7 | 0.2 | 0.8 | 0.0 | 0.0 | 0.0 | 0.0 | 0.0 |
| $H_2$ | 0.1 | 0.1 | 0.1 | 0.1 | 0.5 | 0.0 | 0.0 | 0.0 | 0.0 | 0.0 |

Run 2

A second run was carried out similar to Run 1 above, with the process cycle being similar to the one shown in Figure 6 with the difference being that membrane unit 260 is not used at the back end; and therefore no recycle stream 300 is used. Stream 461 from the cryogenic unit has the needed hydrogen concentration and is mixed with permeate stream 140 from the membrane unit 120 to give the total product stream. In order to get a 97.3% hydrogen product stream, a portion of stream 520 from separator 490 must be expanded across a valve to provide the required cooling in heat exchanger 460.

A comparison of hydrogen recovery and power consumption for Example 5, Runs 1 and 2 are given in Table 9 below.

## Table 9

### Hydrogen Recovery and Power Consumption to Provide 97.3% Hydrogen at 2000 psia for Example 2

| Run | 1 | 2 |
|---|---|---|
| $H_2$ Recovery (%) | 98.9 | 98.2 |
| Power (KW): | | |
| Membrane 260 Reject Stream Compression | 1 | -- |
| Permeate Compression | 307 | 362 |
| Final Product Compression | 38 | 38 |
| TOTAL (KW) | 346 | 400 |

It can be seen from Table 9 above that the single, initial membrane process, Run 2, consumes about 16% more power to recover a similar amount of hydrogen than the process of the present invention; Run 1.

The above examples clearly demonstrate that the present invention provides for high recovery of high purity hydrogen utilizing less energy than prior processes.

The above examples illustrate several processes which can be designed by integrating a cryogenic process system with a membrane separation unit. Any number of additional process schemes could be developed in accordance with the present invention. For example, such process schemes could vary the type of cryogenic process used, the type and size of membrane used, the composition of the product, the composition of the feed, and/or the amount of product which is in the liquid and/or gas phase.

Having thus described the present invention, what is now deemed appropriate for Letters Patent is set out in the following appended claims.

**Claims**

1. A process for the production of gaseous and/or liquid nitrogen from a feed gas stream comprising nitrogen and oxygen, said process comprising:

a) feeding said feed gas stream comprising nitrogen and oxygen to a cryogenic separation unit to treat said gas stream which involves cooling and at least partial removal of one component of the gas stream;

b) withdrawing at least a portion of the treated gas stream having the lower nitrogen concentration from the cryogenic separation unit;

c) feeding said portion of the treated gas stream having the lower nitrogen concentration to a membrane unit wherein said stream is separated to form a nitrogen-rich stream and an oxygen-rich stream;

d) returning said nitrogen-rich stream to the cryogenic separation unit for further treatment and separation; and

e) subsequently recovering a purified liquid and/or gaseous nitrogen-rich product stream from the hydrogen separation unit.

2. The process in accordance with Claim 1 wherein at least a portion of said oxygen-rich stream is returned to the cryogenic separation unit for further processing.

3. The process in accordance with Claim 1 wherein the feed gas stream comprising nitrogen and oxygen is air.

4. The process in accordance with Claim 3 wherein the feed gas stream is passed through an $H_2O$ and $CO_2$ removal unit prior to being fed to the cryogenic separation unit.

5. The process in accordance with Claim 4 wherein said $H_2O$ and $CO_2$ removal unit contains one or more molecular sieve beds.

6. The process in accordance with Claim 1 wherein the total nitrogen recovery, based on the feed stream, is at least 75%.

7. The process in accordance with Claim 1 wherein the nitrogen product has a purity of at least 99.7%.

8. A process for the production of liquid nitrogen from an air feed stream in accordance with Claim 1, said process comprising:

a) passing said air feed stream through a molecular sieve bed to remove water and carbon dioxide, thereby producing a nitrogen-oxygen-rich gas stream;

b) condensing at least a portion of the nitrogen/oxygen-rich gas stream in a cryogenic processing unit to produce a liquid nitrogen/oxygen stream;

c) passing said liquid nitrogen/oxygen stream to a distillation column where it is treated to form an oxygen-rich liquid stream and a gaseous nitrogen stream;

d) condensing said gaseous nitrogen stream to produce a liquid nitrogen stream;

e) reducing the pressure of said liquid nitrogen stream to produce a nitrogen product stream;

f) vaporizing said oxygen-rich liquid stream in step (c) to form a gaseous oxygen-rich stream;

g) passing said gaseous oxygen-rich stream to a membrane unit for separation into an oxygen-rich permeate stream and a nitrogen-containing reject stream; and

h) passing said nitrogen-containing reject stream back through the cryogenic processing unit.

9. The process in accordance with Claim 8 wherein the pressure of the gaseous oxygen-rich stream passed to the membrane unit is chosen such that the pressure of the nitrogen-containing reject stream from the membrane unit is about the same as the pressure of the nitrogen/oxygen-rich gas stream leaving the molecular sieve bed.

10. The process in accordance with Claim 8 wherein the pressure of the gaseous oxygen-rich stream passed to the membrane unit is chosen such that the pressure of the nitrogen-containing reject stream from the membrane unit is significantly higher than the pressure of the nitrogen/oxygen-rich gas stream leaving the molecular sieve bed.

11. A process for the production of gaseous nitrogen from an air feed stream in accordance with claim 1, said process comprising:

a) passing said air feed stream through a molecular sieve bed to remove water and carbon dioxide, thereby producing a nitrogen/oxygen-rich gas stream;

b) cooling said nitrogen/oxygen-rich gas stream;

c) treating said cooled nitrogen/oxygen-rich gas stream in a distillation column to remove nitrogen thereby forming an oxygen-rich stream;

d) passing said oxygen-rich stream to a membrane unit where it is separated to form a permeate stream and a reject stream;

e) returning said reject stream to the distillation column where it is treated along with the nitrogen/oxygen-rich gas stream of step (c) to form a nitrogen-rich stream;

f) withdrawing said nitrogen-rich stream from the distillation column; and

g) heating said nitrogen-rich stream in a series of heat exchangers to produce a gaseous nitrogen . product stream.

12. A process for recovering hydrogen from a feed gas mixture comprising hydrogen and at least one other component, said process comprising:

a) treating said feed gas mixture in a non-membrane separation unit to produce a hydrogen-enriched stream and a hydrogen-depleted stream;

b) withdrawing at least a portion of the hydrogen-enriched stream from the non-membrane separation unit;

c) feeding said portion of said hydrogen-enriched stream to a membrane separation unit, wherein said hydrogen-enriched stream is separated to form a hydrogen-rich stream and a hydrogen-lean stream;

d) recycling the hydrogen-lean stream to the non-membrane separation unit for further treatment and separation to produce a hydrogen-depleted stream; and

e) recovering the hydrogen-rich stream from the membrane separation unit.

13. The process in accordance with Claim 12 wherein the hydrogen-depleted stream produced in step (a) is combined with the hydrogen-depleted stream produced in step (d) and subsequently recovered as product.

14. The process in accordance with Claim 12 wherein the hydrogen-rich stream from the membrane unit is the permeate stream from the membrane and the hydrogen-lean stream is the reject stream.

15. The process in accordance with Claim 12 wherein a hydrogen-rich stream is produced in the non-membrane separation unit and is combined with the hydrogen-rich stream from the membrane unit to form a combined hydrogen product stream.

16. The process in accordance with Claim 12, wherein said non-membrane separation unit is a cryogenic-type separation unit.

17. The process in accordance with Claim 12 wherein the membrane separation unit comprises a

EP 0 186 843 B1

cascade of membranes with internal recycle streams between various stages of the membrane unit.

18. The process in accordance with Claim 12 wherein the feed gas mixture is passed through a membrane separation unit to remove a portion of the hydrogen prior to being treated in the non-membrane separation unit.

19. A process for recovering hydrogen from a feed gas mixture comprising hydrogen and at least one other component in accordance with claim 12, said process comprising:

a) passing said feed gas mixture through a first membrane separation unit to form a first hydrogen-rich stream and a first hydrogen-lean stream;

b) treating said hydrogen-lean stream in a non-membrane separation unit to produce a hydrogen-enriched stream and a hydrogen-depleted stream;

c) withdrawing at least a portion of the hydrogen-enriched stream from the non-membrane separation unit;

d) feeding said portion of said hydrogen-enriched stream to a second membrane unit wherein said hydrogen-enriched stream is separated to form a second hydrogen-rich stream and a second hydrogen-lean stream;

e) recycling the second hydrogen-lean stream to the non-membrane separation unit for further treatment and separation to produce a hydrogen-depleted stream; and

f) recovering both hydrogen-rich streams.

20. The process in accordance with Claim 19 wherein the hydrogen-depleted stream produced in step (b) is combined with the hydrogen-depleted stream produced in step (e) and subsequently recovered as product.

21. The process in accordance with Claim 19 wherein said non-membrane separation unit is a cryogenic-type separation unit.

22. The process in accordance with Claim 19 wherein a third hydrogen-rich stream is produced in the non-membrane separation unit and is combined with both of the hydrogen-rich streams from the membrane separation units to form a combined hydrogen product stream.

23. The process in accordance with Claim 19 wherein the first and second hydrogen-rich streams are combined and passed through a compressor prior to being combined with the third hydrogen-rich stream.

24. The process in accordance with Claim 19 wherein the feed gas mixture comprises hydrogen, hydrogen sulfide, methane and heavier hydrocarbons.

25. The process in accordance with Claim 19 wherein vacuum pumps are used to achieve subatmospheric pressure on the permeate side of the membrane units.

26. The process in accordance with Claim 19 wherein the first and second membrane units are part of a single membrane separation unit with the feed gas and the portion of the treated gas stream from the non-membrane separation entering the single membrane unit at different locations along the unit.

27. The process in accordance with Claim 26 wherein the single membrane separation unit comprises a cascade of membranes with internal recycles.

28. The process in accordance with Claim 19 wherein the hydrogen-rich streams from the membrane units are permeate streams and the hydrogen-lean streams are reject streams.

**Patentansprüche**

1. Verfahren zur Herstellung von gasförmigem und/oder flüssigem Stickstoff aus einem Gaszufhrstrom, der Stickstoff und Sauerstoff umfaßt, wobei das Verfahren umfaßt:

a) Zufuhr des Gaszufhrstromes, der Stickstoff und Sauerstoff umfaßt, zu einer Tieftemperaturtrennanlage, um den Gasstrom zu behandeln, was die Abkühlung und die zumindest teilweise Entfernung einer Komponente des Gasstromes umfaßt,

b) Abziehen zumindest eines Teils des behandelten Gasstromes mit einer geringeren Stickstoffkonzentration aus der Tieftemperaturtrennanlage,

c) Zufuhr dieses Anteils des behandelten Gasstromes mit de geringeren Stickstoffkonzentration zu einer Membraneinheit, worin dieser Strom getrennt wird, um einen stickstoffreichen Strom und einen sauerstoffreichen Strom zu bilden,

d) Rückführung des stickstoffreichen Stromes zur Tieftemperaturtrennanlage zur weiteren Behandlung und Abtrennung und

e) anschließende Gewinnung eines gereinigten flüssigen und/oder gasförmigen stickstoffreichen Produktstromes von der Tieftemperaturtrennanlage.

2. Verfahren nach Anspruch 1, worin mindestens ein Teil des sauerstoffreichen Stromes zur Tieftemperaturtrennanlage zur weiteren Behandlung zurückgeführt wird.

3. Verfahren nach Anspruch 1, worin der Gaszufuhrstrom, der Stickstoff und Sauerstoff umfaßt, Luft ist.

4. Verfahren nach Anspruch 3, worin der Gaszufuhrstrom vor der Zuführung zur Tieftemperaturtrennanlage durch eine Anlage zur Entfernung von $H_2O$ und $CO_2$ geleitet wird.

5. Verfahren nach Anspruch 4, worin die Anlage zur Entfernung von $H_2O$ und $CO_2$ ein oder mehrere Molekularsiebbetten enthält.

6. Verfahren nach Anspruch 1, worin die gesamte Stickstoffgewinnung auf der Basis des

16

EP 0 186 843 B1

Zufuhrstromes mindestens 75% beträgt.

7. Verfahren nach Anspruch 1, worin das Stickstoffprodukt eine Reinheit von mindestens 99,7% aufweist.

8. Verfahren zur Erzeugung von flüssigem Stickstoff aus einem Luftzufuhrstrom nach Anspruch 1, wobei dieses Verfahren umfaßt:

a) Leiten des Luftzufuhrstromes durch ein Molekularsiebbett, um Wasser und Kohlendioxid zu entfernen, wodurch ein stickstoff/sauerstoff-reicher Gasstrom erzeugt wird,

b) Kondensation zumindest eines Teiles des stickstoff/sauerstoff-reichen Gasstromes in einer Tieftemperaturbehandlungsanlage, um einen flüssigen Stickstoff/Sauerstoff-Strom zu erzeugen,

c) Leiten des flüssigen Stickstoff/Sauerstoff-Stromes zu einer Destillationskolonne, wo er behandelt wird, um einen sauerstoffreichen flüssigen Strom und einen gasförmigen Stickstoffstrom zu bilden,

d) Kondensation des gasförmigen Stickstoffstromes, um einen flüssigen Stickstoffstrom zu erzeugen,

e) Reduzierung des Druckes des flüssigen Stickstoffstromes, um einen Stickstoffproduktstrom zu erzeugen,

f) Verdampfen des sauerstoffreichen flüssigen Stromes im Schritt c), um einen gasförmigen, sauerstoffreichen Strom zu bilden,

g) Leiten des gasförmigen sauerstoffreichen Stromes zu einer Membraneinheit, um ihn in einen sauerstoffreichen Durchdringsstrom und einen zurückgehaltenen stickstoffhaltigen Strom zu trennen, und

h) Rückführung des zurückgehaltenen stickstoffhaltigen Stromes durch die Tieftemperaturbehandlungsanlage.

9. Verfahren nach Anspruch 8, worin der Druck es gasförmigen stickstoffreichen Stromes, der zur Membraneinheit geleitet wird, so gewählt ist, daß der Druck des zurückgehaltenen stickstoffhaltigen Stromes von der Membraneinheit etwa der gleiche ist, wie der Druck des stickstoff/sauerstoff-reichen Gasstromes, der das Molekularsiebbett verläßt.

10. Verfahren nach Anspruch 8, worin der Druck des gasförmigen sauerstoffreichen Stromes, der zur Membraneinheit geleitet wird, so gewählt ist, daß der Druck des zurückgehaltenen stickstoffhaltigen Stromes von der Membraneinheit wesentlich höher als der Druck des stickstoff/sauerstoff-reichen Gasstromes ist, der das Molekularsiebbett verläßt.

11. Verfahren zur Herstellung von gasförmigem Stickstoff aus einem Luftzufuhrstrom nach Anspruch 1, wobei dieses Verfahren umfaßt:

a) Leiten des Luftzufuhrstromes durch ein Molekularsiebbet, um Wasser und Kohlendioxid zu entfernen, wodurch ein stickstoff/sauerstoff-reicher Gastrom erzeugt wird,

b) Abkühlung des stickstoff/sauerstoff-reichen Gasstromes,

c) Behandlung des abgekühlten stickstoff/sauerstoff-reichen Gasstromes in einer Destillationskolonne, um Stickstoff zu entfernen, wodurch ein sauerstoffreicher Strom gebildet wird,

d) Leiten des sauerstoffreichen Stromes zu einer Membraneinheit, wo er getrennt wird, um einen Durchdringungsstrom und einen zurückgehaltenen Strom zu bilden,

e) Rückführung des zurückgehaltenen Stromes zur Destillationskolonne, wo er gleichzeitig mit dem stickstoff/sauerstoff-reichen Gasstrom des Schrittes c) behandelt wird, um einen stickstoffreichen Strom zu bilden,

f) Abziehen des stickstoffreichen Stromes von der Destillationskolonne und

g) Erwärmen des stickstoffreichen Stromes in einer Reihe von Wärmeaustauschern, um einen gasförmingen Stickstoffproduktstrom zu erzeugen.

12. Verfahren zur Gewinnung von Wasserstoff aus einer Gaszufuhrmischung, die Wasserstoff und mindestens eine andere Komponente umfaßt, wobei dieses Verfahren umfaßt:

a) Behandlung der Gaszufuhrmischung in einer Trennungsanlage ohne Membran, um einen mit Wasserstoff angereicherten Strom und einen wasserstoffarmen Strom zu erzeugen,

b) Abziehen zumindest eines Teils des mit Wasserstoff angereicherten Stromes von der Trennungsanlage ohne Membran,

c) Zufuhr dieses Teils des mit Wasserstoff angereicherten Stromes zu einer Membrantrennungsanlage, worin der mit Wasserstoff angereicherte Strom getrennt wird, um einen wasserstoffreichen Strom und einen wasserstoffarmen Strom zu bilden,

d) Rezierkulierung des wasserstoffarmen Stromes zur Trennungsanlage ohne Membran zur weiteren Behandlung und Abtrennung, um einer wasserstoffarmen Strom zu erzeugen, und

e) Rückgewinnung des wasserstoffreichen Stromes von der Membrantrennungsanlage.

13. Verfahren nach Anspruch 12, worin der im Schritt a) erzeugte wasserstoffarme Strom mit dem im Schritt d) erzeugten wasserstoffarmen Strom kombiniert und anschließend als Produkt gewonnen wird.

14. Verfahren nach Anspruch 12, worin der wasserstoffreiche Strom von der Membraneinheit der Durchdringungsstrom von der Membran ist und der wasserstoffarme Strom der zurückgehaltenen Strom ist.

15. Verfahren nach Anspruch 12, worin der wasserstoffreiche Strom in der Trennungsanlage ohne Membran erzeugt wird und mit dem wasserstoffreichen Strom von der Membraneinheit kombiniert wird, um einen kombinierten Wasserstoffproduktstrom zu bilden.

16. Verfahren nach Anspruch 12, worin die Trennungsanlage ohne Membran eine Trennungsanlage vom Tieftemperaturtyp ist.

17

## EP 0 186 843 B1

17. Verfahren nach Anspruch 12, worin die Membrantrennungsanlage eine Kaskade von Membranen mit inneren Kreislaufströmen zwischen verschiedenen Stufen der Membraneinheit umfaßt.

18. Verfahren nach Anspruch 12, worin die Gaszufuhrmischung durch eine Membrantrennungsanlage geleitet wird, um einen Teil des Wasserstoffes zu entfernen, bevor sie in der Trennungsanlage ohne Membran behandelt wird.

19. Verfahren zur Gewinnung von Wasserstoff aus einer Gaszufuhrmischung, die Wasserstoff und mindestens eine andere Komponente umfaßt, nach Anspruch 12, wobei dieses Verfahren umfaßt:

a) Leiten der Gaszufuhrmischung durch eine erste Membrantrennungsanlage, um einen ersten wasserstoffreichen Strom und einen ersten wasserstoffarmen Strom zu bilden,

b) Behandlung des wasserstoffarmen Stromes in einer Trennungsanlage ohne Membran, um einen mit Wasserstoff angereicherten Strom und einen wasserstoffarmen Strom zu erzeugen,

c) Abziehen zumindest eines Teils des mit Wasserstoff angereicherten Stromes von der Trennungsanlage ohne Membran,

d) Zufuhr dieses Anteiles des mit Wasserstoff angereicherten Stromes zu einer zweiten Membraneinheit, worin der mit Wasserstoff angereicherte Strom getrennt wird, um einen zweiten wasserstoffreichen Strom und einen wasserstoffarmen Strom zu bilden,

e) Rezirkulierung des zweiten wasserstoffarmen Stromes zur Trennungsanlage ohne Membran zur weiteren Behandlung und Trennung, um einen wasserstoffarmen Strom zu erzeugen, und

f) Gewinnung beider wasserstoffreicher Ströme.

20. Verfahren nach Anspruch 19, worin der im Schritt b) erzeugte wasserstoffarme Strom mit dem im Schritt e) erzeugten wasserstoffarmen Strom kombiniert und anschließend als Produkt gewonnen wird.

21. Verfahren nach Anspruch 19, worin die Trennungsanlage ohne Membran eine Trennungsanlage vom Tieftemperaturtyp ist.

22. Verfahren nach Anspruch 19, worin in der Trennungsanlage ohne Membran ein dritter wasserstoffreicher Strom erzeugt wird und mit beiden wasserstoffreichen Strömen aus den Membrantrennungsanlagen kombiniert wird, um einen kombinierten Wasserstoffproduktstrom zu bilden.

23. Verfahren nach Anspruch 19, worin der erste und der zweite wasserstoffreiche Strom kombiniert und durch eine Kompressionsvorrichtung geleitet werden, bevor sie mit dem dritten wasserstoffreichen Strom kombiniert werden.

24. Verfahren nach Anspruch 19, worin die Gaszufuhrmischung Wasserstoff, Schwefelwasserstoff, Methan und schwerere Kohlenwasserstoffe umfaßt.

25. Verfahren nach Anspruch 19, worin Vakuumpumpen verwendet werden, um auf der Durchdringungsseite der Membraneinheit subatmosphärischen Druck zu erreichen.

26. Verfahren nach Anspruch 19, worin die erste und die zweite Membraneinheit ein Teil einer einzelnen Membrantrennungsanlage sind, wobei die Gaszufuhr und der Teil des behandelten Gasstromes von der Trennung ohne Membran die einzelne Membraneinheit an unterschiedlichen Stellen entlang dieser Einheit betreten.

27. Verfahren nach Anspruch 26, worin die einzelne Membrantrennungsanlage eine Kaskade von Membranen mit inneren Kreisläufen umfaßt.

28. Verfahren nach Anspruch 19, worin die wasserstoffreichen Ströme von den Membraneinheiten Durchdringungsströme und die wasserstoffarmen Ströme zurückgehaltene Ströme sind.

**Revendications**

1. Un procédé pour la production d'azote gazeux et/ou liquide à partir d'un courant gazeux d'alimentation comprenant de l'azote et de l'oxygène, ledit procédé comprenant:

a) l'alimentation, avec ledit courant gazeux d'alimentation comprenant de l'azote et de l'oxygène, d'une unité de séparation cryogénique pour traiter courant gazeux, ce traitement comprenant le refroidissement et au moins une élimination partielle d'un composant du courant gazeux;

b) le prélèvement de l'unité de séparation cryogénique d'au moins une portion du courant gazeux traité ayant une concentration inférieure en azote;

c) l'alimentation, avec ladite portion du courant gazeux traité ayant une concentration inférieure en azote, d'une unité à membrane, dans laquelle ledit courant est séparé pour former un courant riche en azote et un courant riche en oxygène;

d) le retour dudit courant riche en azote dans l'unité de séparation cryogénique pour un traitement et une séparation complémentaires; et

e) par la suite, la récupération d'un courant de produit purifié riche en azote liquide et/ou gazeux à partir de l'unité de séparation cryogénique.

2. Le procédé selon la revendication 1, dans lequel au moins unt portion dudit courant riche en oxygène est retournée à l'unité de séparation cryogénique pour un traitement ultérieur.

3. Le procédé selon la revendication 1, dans lequel le courant gazeux d'alimentation comprenant de l'azote et de l'oxygène est l'air.

4. Le procédé selon la revendication 3, dans lequel le courant gazeux d'alimentation est conduit à travers une unité d'élimination de l'$H_2O$ et du $CO_2$, avant d'être conduit à l'unité de séparation cryogénique.

5. Le procédé selon la revendication 4, dans lequel ladite unité d'élimination de l'$H_2O$ et du $CO_2$ contient

un ou plusieurs lits de tamis moléculaire.

6. Le procédé selon la revendication 1, dans lequel la récupération totale de l'azote relativement au courant d'alimentation est d'au moins 75%.

7. Le procédé selon la revendication 1, dans lequel l'azote produit a une pureté d'au moins 99,7%.

8. Un procédé pour la production d'azote liquide à partir d'un courant d'alimentation d'air selon la revendication 1, ledit procédé comprenant:

a) le passage dudit courant d'alimentation d'air à travers un lit de tamis moléculaire pour éliminer l'eau et le dioxyde de carbone et produire ainsi un courant gazeux riche en azote et en oxygène;

b) la condensation d'au moins une portion du courant gazeux riche en azote et en oxygène dans une unité de traitement cryogénique pour produire un courant liquide d'azote/oxygène;

c) l'amenée dudit courant d'azote/oxygène liquide à une colonne de distillation où il est traité pour former un courant liquide riche en oxygène et un courant d'azote gazeux;

d) la condensation dudit courant d'azote gazeux pour produire un courant d'azote liquide;

e) l'abaissement de la pression dudit courant d'azote liquide pour former un courant de produit constitué d'azote;

f) la vaporisation dudit courant liquide riche en oxygène de l'étape c) pour former un courant gazeux riche en oxygène;

g) l'amenée dudit courant gazeux riche en oxygène à une unité à membrane pour la séparation en un courant de perméat riche en oxygène et un courant de rejet contenant de l'azote; et

h) le retour dudit courant de rejet contenant de l'azote à l'unité de traitement cryogénique.

9. Le procédé selon la revendication 8, dans lequel la pression du courant gazeux riche en oxygène conduit à l'unité à membrane est choisie pour que la pression du courant de rejet contenant de l'azote de l'unité à membrane soit environ la même que la pression du courant gazeux riche en azote/oxygène quittant le lit de tamis moléculaire.

10. Le procédé selon la revendication 8, dans lequel la pression du courant riche en oxygène conduit à l'unité à membrane est choisie pour que la pression du courant de rejet contenant de l'azote de l'unité à membrane soit notablement supérieure à la pression du courant gazeux riche en azote/oxygène quittant le lit de tamis moléculaire.

11. Un procédé pour la production d'azote gazeux à partir d'un courant d'alimentation d'air selon la revendication 1, ledit procédé comprenant:

a) le passage dudit courant dl'alimentation d'air à travers un lit de tamis moléculaire pour éliminer l'eau et le dioxyde de carbone et produire un courant gazeux riche en azote/oxygène;

b) le refroidissement dudit courant gazeux riche en azote/oxygène;

c) le traitement dudit courant riche en azote/oxygène refroidi dans une colonne de distillation pour éliminer l'azote et former ainsi un courant riche en oxygène;

d) l'amenée dudit courant riche en oxygène à une unité à membrane où il est séparé pour former un courant de perméat et un courant de rejet;

e) le retour dudit courant de rejet à la colonne de distillation où il est traité avec le courant gazeux riche en azote/oxygène de l'étape c) pour former un courant riche en azote;

f) le prélèvement dudit courant riche en azote de la colonne de distillation; et

g) le chauffage dudit courant riche en azote dans une série d'échangeurs de chaleur pour produire un courant de produit constitué d'azote gazeux.

12. Un procédé pour récupérer l'hydrogène d'un mélange gazeux d'alimentation comprenant de l'hydrogène et au moins un autre composant, ledit procédé comprenant:

a) le traitement dudit mélange gazeux d'alimentation dans une unité de séparation sans membrane pour produire un courant enrichi en hydrogène et un courant appauvri en hydrogène;

b) le prélèvement d'au moins une portion du courant enrichi en hydrogène de ladite unité de séparation sans membrane;

c) l'alimentation, avec ladite portion dudit courant enrichi en hydrogène, d'une unité de séparation par membrane, dans laquelle ledit courant riche en hydrogène est séparé pour former un courant riche en hydrogène et un courant pauvre en hydrogène;

d) le recyclage du courant pauvre en hydrogène dans l'unité de séparation sans membrane pour un traitement et une séparation complémentaires pour produire un courant appauvri en hydrogène; et

e) la récupération du courant riche en hydrogène à partir de l'unité de séparation par membrane.

13. Le procédé selon la revendication 12, dans lequel le courant appauvri en hydrogène produit dans l'étape a) est combiné avec le courant appauvri en hydrogène produit dans l'étape d), puis récupéré comme produit.

14. Le procédé selon la revendication 12, dans lequel le courant riche en hydrogène de l'unité à membrane est le courant de perméat de la membrane et le courant pauvre en hydrogène est le courant de rejet.

15. Le procédé selon la revendication 12, dans lequel un courant riche en hydrogène est produit dans l'unité de séparation sans membrane et est combiné avec le courant riche en hydrogène de l'unité à membrane pour former le courant combiné de produit constitué d'hydrogène.

16. Le procédé selon la revendication 12, dans lequel ladite unité de séparation sans membrane est une unité de séparation de type cryogénique.

17. Le procédé selon la revendication 12, dans lequel l'unité de séparation à membrane comprend une cascade de membranes avec des courants de recyclage internes entre les divers étages de l'unité à membrane.

18. Le procédé selon la revendication 12, dans lequel le mélange gazeux d'alimentation est conduit à travers une unité de séparation à membrane pour éliminer une portion de l'hydrogène avant le traitement dans l'unité de séparation sans membrane.

19. Un procédé pour la récupération de l'hydrogène d'un mélange gazeux d'alimentation comprenant de l'hydrogène et au moins un autre composant selon la revendication 12, ledit procédé comprenant:

a) le passage dudit mélange gazeux d'alimentation à travers une première unité de séparation par membrane pour former un premier courant riche en hydrogène et un premier courant pauvre en hydrogène;

b) le traitement dudit courant pauvre en hydrogène dans une unité de séparation sans membrane pour produire un courant enrichi en hydrogène et un courant appauvri en hydrogène;

c) le prélèvement d'au moins une portion du courant enrichi en hydrogène de l'unité de séparation sans membrane;

d) l'alimentation, avec ladite portion dudit courant enrichi en hydrogène, d'une seconde unité à membrane, dans laquelle ledit courant enrichi en hydrogène est séparé pour former un second courant riche en hydrogène et un second courant pauvre en hydrogène;

e) le recyclage du second courant pauvre en hydrogène dans l'unité de séparation sans membrane pour un traitement et une séparation complémentaires pour produire un courant appauvri en hydrogène; et

f) la récupération des deux courants riches en hydrogène.

20. Le procédé selon la revendication 19, dans lequel le courant appauvri en hydrogène produit dans l'étape b) est combiné avec le courant appauvri en hydrogène produit dans l'étape e), puis est récupéré comme produit.

21. Le procédé selon la revendication 19, dans lequel ladite unité de séparation sans membrane est une unité de séparation de type cryogénique.

22. Le procédé selon la revendication 19, dans lequel un troisième courant riche en hydrogène est produit dans l'unité de séparation sans membrane et est combiné avec les deux courants riches en hydrogène des unités de séparation par membrane pour former un courant combiné de produit constitué d'hydrogène.

23. Le procédé selon la revendication 19, dans lequel le premier et le second courants riches en hydrogène sont combinés et conduits à travers un compresseur avant d'être combinés avec le troisième courant riche en hydrogène.

24. Le procédé selon la revendication 19, dans lequel le mélange gazeux d'alimentation comprend de l'hydrogène, du sulfure d'hydrogène, du méthane et des hydrocarbures plus lourds.

25. Le procédé selon la revendication 19, dans lequel des pompes à vide sont utilisées pour obtenir une pression subatmosphérique du côté perméat des unités à membrane.

26. Le procédé selon la revendication 19, dans lequel la première et la seconde unités à membrane font partie d'une unité de séparation par membrane unique, le gaz d'alimentation et la portion du courant de gaz traité de la séparation sans membrane entrant dans l'unité à membrane unique en des emplacements différents de l'unité.

27. Le procédé selon la revendication 26, dans lequel l'unité de séparation à membrane unique comprend une cascade de membranes avec des recyclages internes.

28. Le procédé selon la revendication 19, dans lequel les courants riches en hydrogène des unités à membrane sont des courants de perméat et les courants pauvres en hydrogène sont des courants de rejet.

FIG. I

FIG.2

SPECIFIC POWER FOR THE INTEGRATED SYSTEM VERSUS THE
PRESSURE OF THE OXYGEN-RICH EFFLUENT STREAM 146 FROM THE
CRYOGENIC PROCESS FOR VARIOUS MEMBRANE OXYGEN SELECTIVITIES

POWER FOR BASE CRYOGENIC
⚠ LIN GENERATOR

OXYGEN
SELECTIVITY

5

7.5

10.0

KWH/T OF LIN

PRESSURE OF OXYGEN RICH EFFLUENT
STREAM 146

*FIG.3*

EP 0 186 843 B1

# FIG. 4

FIG.5

**FIG. 6**